# EUROPEAN PATENT APPLICATION

(11) **EP 4 525 217 A1**
(43) Date of publication of application: **19.03.2025**
(21) Application number: 24200052.9
(22) Date of filing: 12.09.2024
(51) Int. Cl.: H01R 13/631, H01R 13/533, B60L 53/16

(54) **HIGH-VOLTAGE CONNECTOR COMPRISING A TOLERANCE COMPENSATION DEVICE**

(30) Priority: 15.09.2023 DE 102023125045
(71) Applicant: TE Connectivity Solutions GmbH, 8200 Schaffhausen (CH)
(72) Inventor: SCHUCHT, Olaf, 8200 Schaffhausen (CH); HECKER, Ralf, 8200 Schaffhausen (CH)
(74) Representative: Patentanwaltskanzlei WILHELM & BECK

(57) **Abstract**

The invention relates to an electrical and mechanical high-voltage connector (1) for at least one electrical high-voltage line (2), in particular a stranded line (2), preferably for a vehicle with an electric traction motor, comprising a connector base (10) for mounting the high-voltage connector (1), and at least one terminal receptacle (30), fitted on the connector base (10), for at least one electrical high-voltage terminal (12) of the high-voltage connector (1), said terminal (12) extending in a height direction (Hr) of the high-voltage connector (1), wherein a mechanical articulation arrangement (20) is accommodated between the connector base (10) and the terminal receptacle (30), by means of which the terminal receptacle (30) is movably arranged in the high-voltage connector (1) relative to the connector base (10) for tolerance compensation by the high-voltage connector (1).

## Description

The invention relates to an electrical and mechanical high-voltage connector for at least one electrical high-voltage line, in particular a stranded line, preferably for a vehicle with an electric traction motor. The invention also relates to an electromechanical high-voltage connection, and to an electrical high-voltage entity, in particular an assembled electrical high-voltage line, in each case preferably for a vehicle with an electric traction motor.

In the electrical sector (electrics, electrical engineering, electrical power engineering, etc.), a large number of electrical high-voltage connectors are known. These are used to transmit electrical voltages in the high-voltage range (high voltages: AC voltages over 24 V up to over 1 kV, DC voltages over 48 V up to over 1.5 kV), electrical currents in the high-current range (high currents over 25 A up to over 1 kA) and/or electrical powers in the high-power range (high powers of from 20 kW up to over 350 kW). In this case, the high-voltage connectors, for supplying and/or distributing electrical energy in cold, warm, possibly hot, contaminated, humid and/or chemically aggressive environments, in the short term and/or permanently must ensure problem-free transmission.

Owing to a wide range of applications, aside from ground-based power engineering and its analogues, a large number of such high-voltage connectors are known in the automotive sector and in the non-automotive sector. In the automotive sector, such a high-voltage connector is suitable for example for electromechanically connecting a high-voltage line to a corresponding electrical high-voltage entity or vice versa, for connecting electrical high-voltage lines, or for a different electromechanical high-voltage contact connection. - In this specification, the term "high-voltage" is intended to encompass the terms high-voltage, high-current and/or high-power (cf. above).

High costs for fossil fuels and efforts to reduce environmental impacts make, for example in the automotive sector, hybrid or electric vehicles necessary. One aspect of these vehicles is handling of high electrical charging and operating voltages and high electrical charging and operating currents, wherein the components in question of the vehicles need to be designed correspondingly. This relates, in particular, to high-voltage lines (for example lines, stranded lines (cables, cable harnesses), conductor bars, busbars, leadframes, etc.) and to the relevant high-voltage terminals (for example connection pieces, flat contacts, busbars, conductor bars, etc.) and thus also to the high-voltage connectors.

If there is a high-voltage connector on a high-voltage cable, reference is also made to a flying high-voltage plug connector or a high-voltage coupling. If there is a high-voltage connector at/in an electrical high-voltage entity (cf. below), for example a portion of a housing thereof, or another wall, reference is also made to a high-voltage attached connector. - In the context of electrical power engineering (generating, converting, storing and transporting high-voltage electrical current in electricity grids, preferably with three-phase high-voltage transmission), owing to their complex structure reference is conversely made to cable accessories.

Solid conductor bars, often called busbars, are fastened to a body of a vehicle, for example in a wheel arch, by way of a high-voltage mating connector and are provided for electrical contact connection by a high-voltage connector, which can in turn be firmly screwed to the body after the plug-in operation. The solid conductor bars are rigid and cannot move in comparison to flexible stranded lines, as a result of which alignment errors during fitting of the high-voltage mating connector cannot be compensated.

Manufacturing tolerances, tolerances owing to the fastening of the conductor bars to the wheel arch and housing tolerances lead, when such a connection is being plugged in, to what are referred to as axial deviations in the plug-in direction, which can cause, inter alia, the problems below. The high-voltage connectors cannot be joined or fully plugged in. The high-voltage connector can be joined and/or plugged in only with difficulty and/or under high mechanical stresses, possibly leading to damage and functional failures.

Efforts are continually being made to improve electrical high-voltage connectors. Particularly for the next generation of electromobility, it is desired to be able to establish electrical high-voltage connections, for example by or with a high-voltage connector, for example to a wall or a high-voltage entity in a vehicle in a rapid, simple and reliable manner. - It is an object of the invention to specify a high-voltage connector preferably for a vehicle with an electric traction motor.

The object of the invention is achieved by means of an electrical and mechanical high-voltage connector for at least one electrical high-voltage line, in particular a stranded line, preferably for a vehicle with an electric traction motor; and by means of an electromechanical high-voltage connection, and an electrical high-voltage entity, in particular an assembled electrical high-voltage line, in each case preferably for a vehicle with an electric traction motor. - Advantageous developments, additional features and/or advantages of the invention emerge from the dependent claims and/or the description below.

The high-voltage connector according to the invention comprises a connector base for mounting the high-voltage connector, and at least one terminal receptacle, fitted on the connector base, for at least one electrical high-voltage terminal of the high-voltage connector, said terminal extending in a height direction of the high-voltage connector, wherein a mechanical articulation arrangement is arranged or accommodated between the connector base and the terminal receptacle, by means of which the terminal receptacle is significantly movably arranged in the high-voltage connector relative to the connector base for tolerance compensation by the high-voltage connector. Of course, at least one high-voltage terminal can be arranged in the terminal receptacle and can be connected to the at least one high-voltage line.

According to the invention, compared with the prior art, more cost-effective fitting by a rapid fitting process is achieved. Fitting errors are minimized or eliminated. Short process times and fewer failures result in considerably higher customer satisfaction.

By means of the connector base, the high-voltage connector is able to be mounted (seated, received, etc.) for example on a wall (for example body wall, wheel arch wall, housing wall, etc.), on a portion, in a connector receptacle of a high-voltage mating connector, etc. The terminal receptacle may, in the fitting direction of the high-voltage connector, that is to say in the plug-in direction of its high-voltage terminals, be provided with a spacing to the connector base, extend into the latter or extend through the latter. Here, the terminal receptacle is of course accessible through a through-cutout in the connector base for the high-voltage mating connector.

The articulation arrangement makes it possible to realize exactly one, at least one or two in particular limited rotational degrees of freedom and/or exactly one, at least one or two in particular limited translational degrees of freedom between the connector base and the terminal receptacle. The axes of the degrees of freedom are self-evidently perpendicular to one another here.

A limited rotational degree of freedom should be understood to mean a possible rotatability or pivotability of the terminal receptacle in relation to the connector base (or of course vice versa) of in particular at least or at most about: ±2°; ±4°; ±6°; ±8°; ±10°; ±12°; ±14°; ±16°, ±18°, ±20° (significant movability). If the terminal receptacle has two rotational degrees of freedom in relation to the connector base, a centre line of a high-voltage terminal in the terminal receptacle can move within a preferably straight (elliptical or circular) cone, which has the aforementioned angles as opening angles.

A limited translational degree of freedom should be understood to mean a possible linear displaceability of the terminal receptacle in relation to the connector base (or of course vice versa) of in particular at least or at most about: ±0.5 mm, ±1 mm, ±1.5 mm, ±2 mm, ±2.5 mm, ±3 mm, ±3.5 mm, ±4 mm, ±4.5 mm, ±5 mm, ±5.5 mm, ±6 mm (significant movability). If the terminal receptacle has two translational degrees of freedom in relation to the connector base, a centre line of a high-voltage terminal in the terminal receptacle can move within a rectangle or square, which has the aforementioned side lengths.

A rotational degree of freedom of the terminal receptacle about an axis of the high-voltage connector and a corresponding translational degree of freedom of the terminal receptacle along this axis may be realized by a single bearing in the articulation arrangement. - A bearing can, in principle, comprise two bearing devices. Such a bearing device may be realized as a journal bearing device, that is to say a journal received in a bushing, the journal being able to rotate or pivot and move linearly with respect to the bushing and/or the bushing being able to rotate or pivot and move linearly with respect to the journal.

The articulation arrangement may be in the form of a cardanic bearing and is used to mount the terminal receptacle on the connector base, wherein the cardanic bearing is preferably configured in such a way that the terminal receptacle has at least one or two limited translational degrees of freedom. This means the terminal receptacle is received (mounted, suspended, etc.) via a component part of the high-voltage connector with the aid of two rotary bearings on the connector base, the axes of the two rotary bearings intersecting substantially at right angles. Here, axial play, that is to say an application-related movement clearance, of a respective rotary bearing in the direction of its axis makes it possible to realize a respective, limited translational degree of freedom of the terminal receptacle.

In order to realize a rotational degree of freedom of the terminal receptacle, the articulation arrangement may have a rotary bearing for each rotational degree of freedom. Preferably, for each rotational degree of freedom, two rotary bearing devices which are mutually opposite with respect to the terminal receptacle are configured as a rotary bearing in the articulation arrangement. The rotary bearing can of course also be in the form of a pivot bearing here.

A rotary bearing or a rotary bearing device may be realized by means of a bearing journal rotatably received in a bearing bushing, or vice versa. In particular, a rotary bearing may be realized by means of two bearing journals rotatably received in two bearing bushings, the bearing bushings and the bearing journals of course being arranged coaxially. Furthermore, a rotary bearing or a rotary bearing device may, for example, be realized by means of a (partial) peripheral guide. This means, for example, a (partial) peripheral projection is guided in a (partial) peripheral groove or a circular(-segment-shaped) cutout (bore). It is of course possible to use other rotary bearings. For a rotary bearing, it is of course possible to use two rotary bearing devices of differing design.

In order to realize a translational degree of freedom of the terminal receptacle, the articulation arrangement may have a thrust bearing for each translational degree of freedom. Preferably, for each translational degree of freedom, two thrust bearing devices which are mutually opposite with respect to the terminal receptacle are configured as a thrust bearing in the articulation arrangement. A thrust bearing or a thrust bearing device may be realized by means of a bearing journal linearly displaceably received in a bearing bushing, or vice versa. In particular, a thrust bearing may be realized by means of two bearing journals linearly displaceably received in two bearing bushings, the bearing bushings and the bearing journals preferably being arranged coaxially, but also being able to be arranged eccentrically. It is of course possible to use a different thrust bearing or thrust bearing device, such as a guide, a linear bearing, etc.

In the articulation arrangement, a thrust bearing of the terminal receptacle may be realized by means of an axial movement clearance of a rotary bearing of the terminal receptacle. - Furthermore, the high-voltage connector may comprise at least one resetting device for at least one of the bearings of the terminal receptacle, wherein the resetting device is configured in such a way that it has the tendency to bring the terminal receptacle to a previous position at/in the high-voltage connector in an indirect and/or direct manner.

It is of course possible for the high-voltage connector to comprise at least/exactly one, two, three or four such resetting devices. Preferably, a resetting device is in the form of a spring element, an elastic element, etc., which indirectly and/or directly pushes the terminal receptacle in the direction of its starting position. The starting position is preferably a position centred at/in the connector base here.

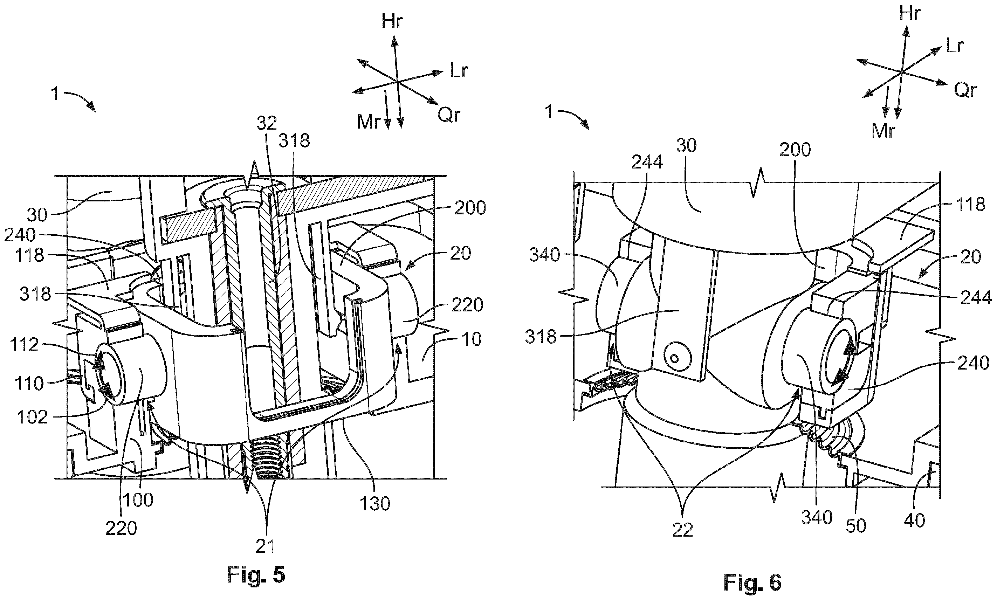

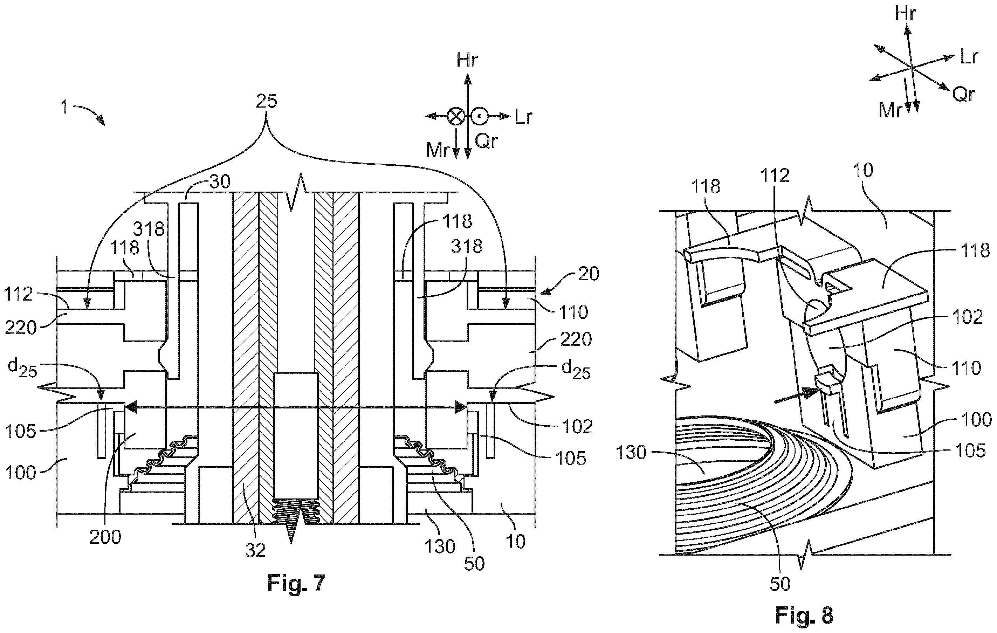

In one embodiment, a mount may be received in/at the connector base in such a way as to be rotatable about and/or displaceable in a longitudinal direction of the high-voltage connector (cf. Figures 5 and 7). In this case, an axis of rotation (for example parallel to a longitudinal axis of the high-voltage connector) of the mount itself is substantially perpendicular to an axis (of rotation) (for example parallel to a transverse axis/height axis of the high-voltage connector) of the terminal receptacle. A bearing of the mount in/at the connector base may comprise two bearing devices, between which the actual mount is arranged in the high-voltage connector. A first bearing of the articulation arrangement may be here in the form of at least one journal bearing device between the mount and the connector base. The bearing or the journal bearing enables a single limited rotational and/or a single limited translational degree of freedom of the mount in/at the connector base.

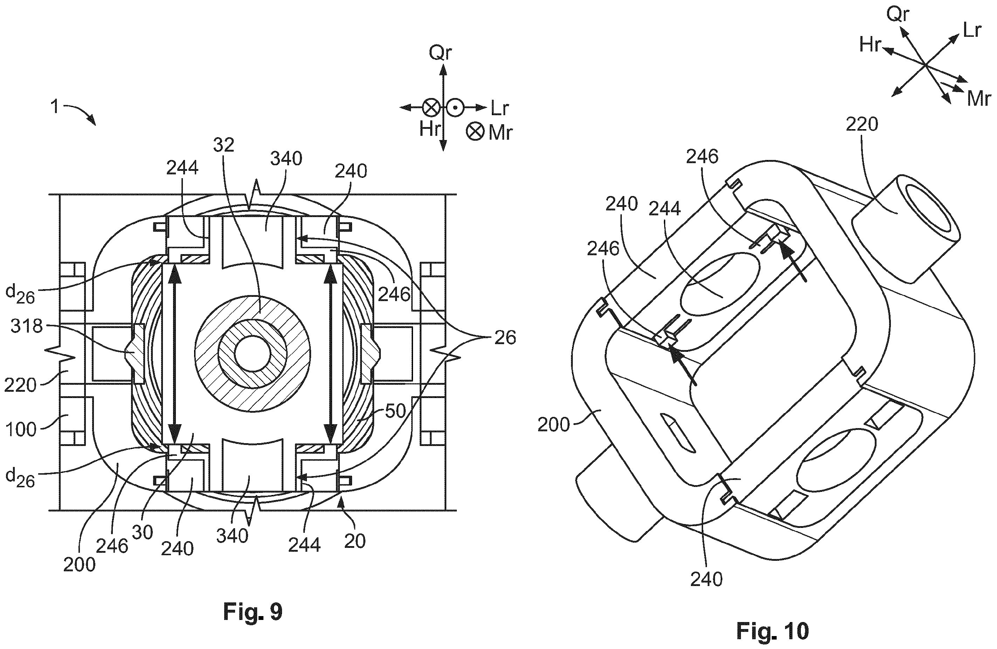

In one embodiment, the terminal receptacle may be received in/at a/the mount in such a way as to be rotatable about and/or displaceable in a transverse direction of the high-voltage connector (cf. for example Figures 6 and 9). In this case, an axis of rotation (for example parallel to a transverse axis of the high-voltage connector) of the terminal receptacle itself is substantially perpendicular to an axis (of rotation) (for example parallel to a longitudinal axis/height axis of the high-voltage connector) of the mount. A bearing of the terminal receptacle in/at the mount may comprise two bearing devices, between which the terminal receptacle is arranged in the high-voltage connector. A second bearing of the articulation arrangement may be here in the form of at least one journal bearing device between the terminal receptacle and the mount. The bearing or the journal bearing enables a single limited rotational and/or a single limited translational degree of freedom of the terminal receptacle in/at the mount.

The mount may, for example, be in the form of a frame, a ring, open or closed around a periphery, a cage, u-shaped, v-shaped, etc. In principle, the mount can have any form, as long as it can be used to realize a desired number of rotational and/or translational degrees of freedom within the high-voltage connector.

By means of an axial movement clearance between the mount and the connector base, a translational displaceability of the mount in the longitudinal direction of the high-voltage connector in/at the connector base can be provided (cf. again for example Figure 7). The mount may also be arranged in/at the connector base so as to be cushioned by means of at least one spring element, wherein the spring element is preferably cut free out of a respective wall. In such a case, the axial movement clearance can preferably in turn be used only against a force from a spring element. In addition, the spring element serves to reset the mount to a relative rest position in/at the connector base or to reset it as far as possible in the direction of its rest position, for example after the high-voltage connector has been fitted to a high-voltage mating connector.

The axial movement clearance between the mount and the connector base may be limited in the longitudinal direction by means of a material overlap between the terminal receptacle and the mount. If the connector base for mounting the mount comprises a fitting means (cf. below), the material overlap is of course effected with such a fitting means.

By means of an axial movement clearance between the terminal receptacle and the mount, a translational displaceability of the terminal receptacle in the transverse direction of the high-voltage connector in/at the mount can be provided (cf. again for example Figure 9). The terminal receptacle may also be arranged in/at the mount so as to be cushioned by means of at least one spring element, wherein the spring element is preferably cut free out of a respective wall. In such a case, the axial movement clearance can preferably in turn be used only against a force from a spring element. In addition, the spring element serves to reset the terminal receptacle to a relative rest position in/at the mount or to reset it as far as possible in the direction of its rest position, for example after the high-voltage connector has been fitted to a high-voltage mating connector.

The axial movement clearance between the terminal receptacle and the mount may be limited in the longitudinal direction by means of a material overlap between the terminal receptacle and the mount. Were the mount for mounting the terminal receptacle to comprise a bearing insert (cf. below), the material overlap can of course be effected with such a bearing insert or else with the mount itself.

The (first) bearing of the mount in/at the connector base may be arranged between a fitting means of the connector base and a bearing cover. In this case, the bearing cover may be latched, clipped, adhesively bonded, etc. to the fitting means, the bearing cover being able to be fitted to/on the fitting means by plugging and/or sliding. The (second) bearing of the terminal receptacle in/at the mount may be arranged in a wall of the mount by means of a bearing insert. In this case, the bearing insert may be latched, clipped, adhesively bonded, etc. to the wall of the mount, the bearing insert being able to be fitted in the wall of the mount by plugging and/or sliding. - Here, a wall of the bearing cover may extend substantially in the transverse direction and a wall of the bearing insert may extend substantially in the longitudinal direction.

The first and/or the second rotary bearing may comprise a resetting device which mechanically rotationally preloads the mount and/or the terminal receptacle in a direction of a respective relative starting position. Here, the resetting device of the first rotary bearing may be in the form of a spring element, in particular a leaf spring, of the bearing cover, said resetting device preloading the mount into the starting position thereof at/in the connector base and having the tendency to bring the mount directly into the starting position thereof at/in the connector base. And the resetting device of the second rotary bearing may be in the form of a spring element, in particular a spring arm, of the terminal receptacle, said resetting device preloading the terminal receptacle into the starting position thereof at/in the mount and having the tendency to bring the terminal receptacle directly into the starting position thereof at/in the mount.

The first and/or the second thrust bearing may comprise a resetting device which mechanically translationally preloads the mount and/or the terminal receptacle in a direction of a respective relative starting position. Here, the resetting device of the first thrust bearing may be in the form of a spring element, in particular a leaf spring, of the fitting means, said resetting device preloading the mount into the starting position thereof at/in the connector base and having the tendency to bring the mount directly into the starting position thereof at/in the connector base. And the resetting device of the second thrust bearing may be in the form of a spring element, in particular a spring arm, of the mount or of the bearing insert, said resetting device preloading the terminal receptacle into the starting position thereof at/in the mount and having the tendency to bring the terminal receptacle directly into the starting position thereof at/in the mount.

The connector base may be in the form of a cage, a plug or a plate. The connector base may also comprise, opposite the articulation arrangement, a seal. This seal may be arranged, for example in the form of a profile seal, an O-ring etc., in the in particular platelike connector base in a radially outwardly encircling groove. Furthermore, a seal may be arranged between the connector base and the terminal receptacle. This seal, which is preferably based on the form of a surface of a truncated cone, may in particular be in the form of a boot etc. In addition, the fitting means of the connector base may be in the form of a bar or a pedestal. Furthermore, the fitting means and/or the bearing insert may be in the form of a plug-in and/or sliding fitting element.

Exactly or at least one terminal receptacle may be received in an individual articulation arrangement of the high-voltage connector. The high-voltage connector may also comprise exactly one, at least one, exactly two or at least two articulation arrangements. Furthermore, for each individual terminal receptacle, an individual articulation arrangement may be provided at/in the connector base.

The high-voltage connection according to the invention preferably for a vehicle with an electric traction motor comprises an electrical and mechanical high-voltage connector and an electrical high-voltage mating connector, wherein the high-voltage connector is configured according to the invention. - Here, the high-voltage connector and the high-voltage mating connector can be plugged together and possibly screwed together or else unplugged from one another.

Here, the high-voltage connector can be electromechanically connected to at least one electrical high-voltage line, in particular a stranded line. The high-voltage mating connector can also be electromechanically connected to at least one electrical high-voltage line, in particular a busbar. Furthermore, the high-voltage line can be electromechanically connected to an electrical high-voltage entity aside from its connector.

The high-voltage entity according to the invention, in particular the assembled high-voltage line according to the invention, comprises an electrical and mechanical high-voltage connector, wherein an electrical high-voltage terminal is arranged in at least one terminal receptacle of the high-voltage connector, and the high-voltage connector is configured according to the invention. - In this case, the high-voltage entity may in particular comprise a power-electrical device or a wall for example of the power-electrical device, to which the high-voltage connector is fastened. Furthermore, the assembled electrical high-voltage line may comprise a high-voltage line (cf. above) which is electrically connected to the high-voltage connector.

Such a high-voltage entity may, for example, be in the form of an electrical high-voltage component (for example electric motor), an electrical high-voltage module (for example accumulator module, traction battery module), an electrical high-voltage element (for example accumulator, traction battery), an electrical high-voltage device (for example inverter, switchgear cabinet), an electrical high-voltage apparatus (for example charging station), an electrical high-voltage assembly (for example electric traction motor), an electrical high-voltage installation (for example switching installation), etc.

A vehicle - in particular a motor vehicle (road vehicle, utility vehicle, etc.), but also: rail vehicle, watercraft and/or aircraft - with an electric traction motor is understood to mean a motor vehicle which, in addition to an electric traction motor, may comprise a further non-electric drive, such as an internal combustion engine. That is to say a vehicle with an electric traction motor can be understood to mean, for example, an electric vehicle (electromotive drive only), a hybrid electric vehicle, a fuel cell vehicle, etc.

The invention is explained in greater detail below on the basis of exemplary embodiments with reference to the appended schematic drawings which are not to scale. Portions, elements, component parts, units, components and/or diagrams which have an identical, unique or analogous configuration and/or function are denoted by the same reference designations in the description of the figures (see below), the list of reference designations, the patent claims and in the figures (figs) of the drawing. A possible alternative which is not explained in the description of the invention (see above), is not illustrated in the drawing and/or is not definitive, a static and/or kinematic reversal, a combination etc., with respect to the exemplary embodiments of the invention or a component, a diagram, a unit, a component part, an element or a portion thereof, can also be gathered from the list of reference designations and/or the description of the figures.

In the case of the invention, a feature (portion, element, component part, unit, component, function, variable etc.) can be of positive configuration, that is to say present, or of negative configuration, that is to say absent. In this specification (description (description of the invention (see above), description of the figures (see below)), list of reference designations, patent claims, drawing), a negative feature is not explained explicitly as a feature if value is not placed on it being absent according to the invention. That is to say, the invention which is actually made and not an invention constructed by way of the prior art consists in omitting said feature.

A feature of this specification can be used not only in a specified manner and/or way, but rather also in another manner and/or way (isolation, combination, replacement, addition, on its own, omission, etc.). In particular, it is possible, in the description, the list of reference designations, the patent claims and/or the drawing, to replace, add or omit a feature in the patent claims and/or the description on the basis of a reference designation and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for said feature to be transferred to a generalized inventive concept. The absence of a feature (negative feature) in an exemplary embodiment shows that the feature is optional as appropriate in relation to the invention (person skilled in the art). In addition, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary and schematic figures of the drawing:
Figures 1 and 2 show perspective views of an exemplary installation situation for a high-voltage connector according to the invention, opposite a high-voltage mating connector, on a wall of a wheel arch of a vehicle,
Figure 3 shows a sectional perspective view of an illustration of a problem during the fitting of the electrical and mechanical high-voltage connector to the electrical high-voltage mating connector,
Figure 4 shows a three-dimensional detail view of a mechanically articulated mounting or suspension of one of at least one, in particular two terminal receptacles in the high-voltage connector,
Figures 5 and 6 show sectional three-dimensional detail views of a first (Figure 5) and a second (Figure 6) rotary bearing of a cardanic bearing of the terminal receptacle in the high-voltage connector,
Figures 7 and 8 show a sectional two-dimensional detail view (Figure 7) and a sectional three-dimensional detail view (Figure 8) of a first thrust bearing of the terminal receptacle in the high-voltage connector, and
Figures 9 and 10 show a sectional two-dimensional detail view (Figure 9) and a three-dimensional detail view (Figure 10) of a second thrust bearing of the terminal receptacle in the high-voltage connector.

The invention is explained in greater detail below on the basis of exemplary embodiments of an embodiment of an electrical high-voltage connector 1, in particular of a high-voltage plug connector 1, for a wall 0 of a wheel arch of a vehicle. The invention is of course also applicable to other electrical high-voltage connectors 1. Here, the high-voltage connector 1 may, for example, be in the form of an attached connector, a built-in connector, an interface, a plug, a socket, a coupling, an outlet, a flying connector, etc.

Although the invention is described and illustrated further in greater detail by way of preferred exemplary embodiments, the invention is not restricted by the disclosed exemplary embodiments, but rather is of a more fundamental nature. Other variations can be derived therefrom and/or from the above (description of the invention), without departing from the scope of protection of the invention. The invention can be used in general in the electrical sector, that is to say also in the non-automotive sector, in the case of an electrical entity or high-voltage entity (cf. above). One exception is ground-based electrical power engineering and its analogues.

The drawing shows only those physical portions of subject matter of the invention which are necessary for understanding the invention. Designations such as connector and mating connector, terminal and mating terminal etc. are to be interpreted synonymously, that is to say may be mutually interchangeable. - The explanation of the invention (cf. also above) with reference to the drawing refers below, inter alia, to a (bidirectional) longitudinal axis/direction Lr, a (bidirectional) height axis/direction Hr (also able to be referred to as terminal longitudinal direction Hr) and a (bidirectional) transverse axis/direction Qr of the high-voltage connector 1. A monodirectional fitting direction Mr of the high-voltage connector 1 is, as the plug-in direction of the high-voltage terminal 32 (high-voltage connector 1) onto a high-voltage mating terminal (high-voltage mating connector 5), parallel to the height axis Hr.

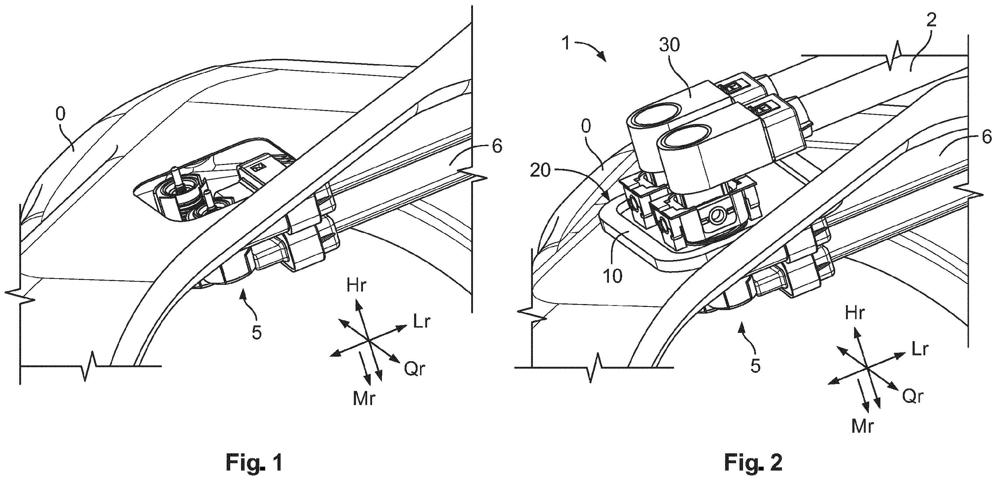

Figures 1 and 2 show an installation situation for one embodiment of an electrical and mechanical high-voltage connector 1 according to the invention on a wall 0 of a wheel arch. Arranged within a cutout in the wall 0 is an electrical high-voltage mating connector 5 which is connected to electrical busbars 6 and is intended to be (Figure 1) or is (Figure 2) electrically contacted by the high-voltage connector 1 according to the invention. In the present case, the high-voltage connector 1 comprises 2 high-voltage terminals 32 which extend in the height direction Hr and are connected to electrical high-voltage lines 2 in the form of stranded lines 2 (assembled electrical high-voltage line 1/2). In the present case, the high-voltage connector 1 comprises two high-voltage terminals 32, but may also comprise one single or more than two high-voltage terminals 32.

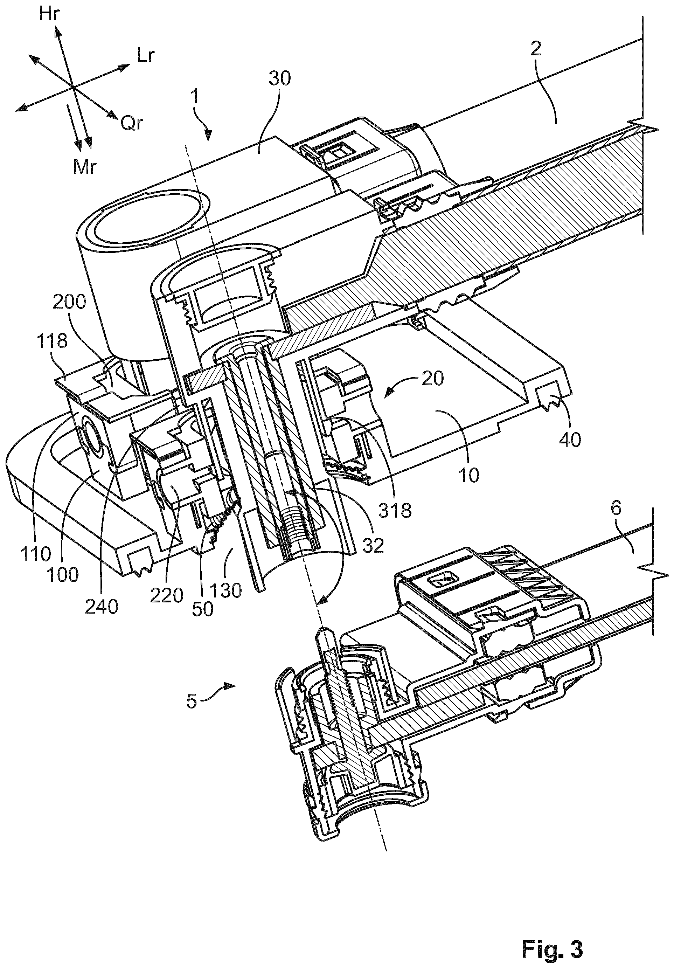

As explained in the introduction, owing to tolerances there is the problem of what are referred to as axial deviations between the high-voltage terminals 32 and the high-voltage mating terminals when the high-voltage connector 1 is being fitted to the high-voltage mating connector 5, this being illustrated in Figure 3. The axial directions (height direction Hr) of terminals which relate to one another may not be arranged coaxially and also may not be arranged parallel to one another during the fitting, but rather may have an angular offset and an axial offset in each case in two directions. This problem is effectively counteracted by a mechanical articulation arrangement 20 in the high-voltage connector 1.

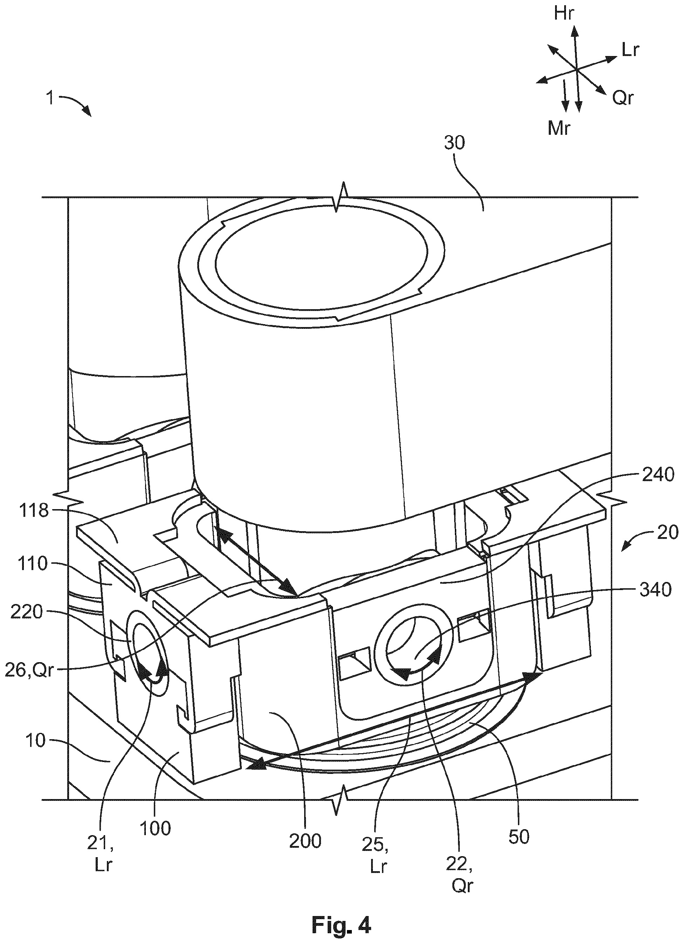

A mechanical high-voltage connector housing 10, 20, 30, cf. initially Figures 3 and 4, for the high-voltage connector 1 comprises a connector base 10 for mounting the high-voltage connector 1, and at least one terminal receptacle 30, which is fittable or fitted to the connector base 10, for at least one high-voltage terminal 32 of the high-voltage connector 1. The articulation arrangement 20 of the high-voltage connector housing 10, 20, 30, said device being in the form of a tolerance compensation device 20, is arrangeable or arranged between the connector base 10 and the terminal receptacle 30 and is used to arrange the terminal receptacle 30, and thus also a high-voltage terminal 32 arranged in the high-voltage connector housing 10, 20, 30, in the high-voltage connector 1 in an articulated manner in relation to the connector base 10.

In the present case, the articulation arrangement 20 comprises, cf. the arrows in Figure 4, a first rotary bearing 21 (also able to be referred to as pivot bearing 21), a second rotary bearing 22 (also able to be referred to as pivot bearing 22), a first thrust bearing 25 and a second thrust bearing 26 between the connector base 10 and the terminal receptacle 30. In particular, here, a rotary bearing 21, 22 may additionally be in the form of a thrust bearing 25, 26, or vice versa; that is to say, for example, that significant axial play of the rotary bearing 21, 22 realizes the thrust bearing 25, 26. - It is of course possible to not establish all four bearings 21, 22; 25, 26, but rather merely one, two or three thereof. In such cases, it is preferable to establish a rotary bearing 21, 22 rather than a thrust bearing 25, 26.

An individual rotary bearing 21, 22 realizes here a single rotational degree of freedom and an individual thrust bearing 25, 26 realizes here a single translational degree of freedom of the terminal receptacle 30 in relation to the connector base 10. - For the terminal receptacle 30, the rotary bearing 21 realizes (via a mount 200, cf. below) a limited rotational degree of freedom about the longitudinal axis Lr and the rotary bearing 22 realizes a limited rotational degree of freedom about the transverse axis Qr. Furthermore, the thrust bearing 25 realizes (via the mount 200) a limited translational degree of freedom along the longitudinal axis Lr and the thrust bearing 26 realizes a limited translational degree of freedom along the transverse axis Qr for the terminal receptacle 30.

In the present case - cf. also Figures 5 to 10 - the articulation arrangement 20 realizes a cardanic bearing of the terminal receptacle 30 in relation to the connector base 10 with two rotational degrees of freedom. Furthermore, it is possible for no, one or both thrust bearings 25, 26 to be realized by means of the cardanic bearing or the articulation arrangement 20. - For this purpose, the articulation arrangement 20 comprises a frame-like mount 200 which is received in an articulated manner in relation to the connector base 10 and in which the terminal receptacle 30 is arranged in an articulated manner.

Here, the first rotary bearing 21 (cf. Figures 4 and 5) and the first thrust bearing 25 (cf. Figures 7 and 8) of the articulation arrangement 20 are arranged between the connector base 10 and the mount 200. Furthermore, the second rotary bearing 22 (cf. Figures 4 and 6) and the second thrust bearing 26 (cf. Figures 9 and 10) of the articulation arrangement 20 are arranged between the mount 200 and the terminal receptacle 30. Here, a rotary bearing 21, 22 and a related thrust bearing 22, 26 are realized as a single (rotary and thrust) bearing 21/25, 22/26, in particular as a journal bearing 21/25, 22/26 with axial movability of a respective bearing journal 220, 340 in a related bearing shell 102/112, 244.

The statements below relate to a rest position of the terminal receptacle 30 in the high-voltage connector 1, as is also illustrated in the drawing. Here, the mount 200 is of course also in its rest position. A respective relative position of the terminal receptacle 30 or else of the mount 200 is produced depending on how far the respective rotary and thrust bearing 21/25, 22/26 has to move out of its rest position owing to the fitting of the high-voltage connector 1 to the high-voltage mating connector 5. Rotational angles of a rotary bearing 21, 22 and displacement distances of a thrust bearing 25, 26 are mentioned above by way of example.

The second rotary and thrust bearing 22/26 (cf. Figures 4, 6, 9 and 10) is arranged between a bearing journal 340, protruding laterally from the terminal receptacle 30, and a bearing shell 244 of a bearing bushing in a side wall of the mount 200. This can of course have a kinematically reversed design. Preferably, two such bearing journals 340 and bearing shells 244 are used. Here, the second rotary and thrust bearing 22/26 enables the rotational degree of freedom about, and the translational degree of freedom in, the transverse direction Qr of the high-voltage connector 1.

The bearing journal 340 is preferably received here in a bearing insert 240 in a wall of the mount 200. The bearing insert 240 may be plugged or slid here into a cutout in the wall of the mount 200 and be latched, clipped, adhesively bonded etc. thereto. The bearing insert 240 is in particular in the form of a disc or a plate and may, for example, have the thickness of the wall of the mount 200.

The thrust bearing 26 in the rotary and thrust bearing 22/26 is realized by means of an axial movement clearance d₂₆ of the terminal receptacle 30 in the mount 200 or between the bearing inserts 240 (cf. Figure 9). That is to say, the terminal receptacle 30 is received in the mount 200 in such a way as to be movable back and forth to a certain degree, for which the bearing journals 340 of course have to be of long enough design. Here, the terminal receptacle 30 can be mechanically preloaded translationally into its relative rest position in the mount 200.

This is effected by means of at least one resetting device 246 which is, for example, in the form of a spring element 246 or an elastic element 246 and preloads the terminal receptacle 30 into its relative rest position in the mount 200. In the present case, an individual resetting device 246 is in the form of a spring arm 246, two spring arms 246 which act substantially in parallel being used per side of the bearing. In each case, preferably, two spring arms 246 are arranged here adjacent to a bearing shell 244 in the mount 200 or a bearing insert 240 and are, for example, cut free out of a respective wall.

Furthermore, the rotary bearing 22 of the second rotary and thrust bearing 22/26 (cf. Figure 7) can be mechanically preloaded rotationally into its relative rest position in the mount 200 and/or be rotationally arrested there. For this purpose, the terminal receptacle 30 comprises a resetting device 318 which is, for example, in the form of a spring element 318 or an elastic element 318 and preloads the terminal receptacle 30 into its relative rest position in the mount 200 and/or arrests it there.

In the present case, an individual resetting device 318 is in the form of a spring arm 318, two spring arms 318 which act substantially in parallel being able to be used per side of the bearing. The spring arm 318 in question can engage here into a cutout in the mount 200 and thus mechanically preload or arrest the terminal receptacle 30 in relation to the mount 200. If the terminal receptacle 30 rotates about its longitudinal direction Lr, this latching connection can be brought out of engagement.

The first rotary and thrust bearing 21/25 (cf. Figures 4, 5, 7 and 8) is arranged between a bearing journal 220, protruding laterally away from the mount 200, and a bearing shell 102/112 of a bearing bushing in a fitting means 100, including a bearing cover 110 (cf. below), of the connector base 10. This can of course have a kinematically reversed design. Preferably, two such bearing journals 220 and bearing shells 102/112 are used. Here, the first rotary and thrust bearing 21/25 enables the rotational degree of freedom about, and the translational degree of freedom in, the longitudinal direction Lr of the high-voltage connector 1.

The fitting means 100 of the connector base 10 may be in the form of a bar or a pedestal and have a bearing half-shell 102 for the first rotary and thrust bearing 21/25 therein. On the opposite side, the bearing half-shell 102 is closed by a bearing cover 110 with a bearing half-shell 112, the two bearing half-shells 102, 112 forming the bearing bushing of the connector base 10. The bearing cover 110 may be plugged or slid onto/into the fitting means 100 and be latched, clipped, adhesively bonded etc. thereto.

The thrust bearing 25 in the rotary and thrust bearing 21/25 is realized by means of an axial movement clearance d₂₅ of the mount 200 on the connector base 10 or between the two fitting means 100 and bearing covers 110 (cf. Figure 7). That is to say, the mount 200 is received on the connector base 10 in such a way as to be movable back and forth to a certain degree, for which the bearing journals 220 of course have to be of long enough design. Here, the mount 200 can be mechanically preloaded translationally into its relative rest position on the connector base 10.

This is effected by means of at least one resetting device 105 which is, for example, in the form of a spring element 105 or an elastic element 105 and preloads the mount 200 into its relative rest position on the connector base 10. In the present case, an individual resetting device 105 is in the form of a spring arm 105, two spring arms 105 which act substantially in parallel being used per side of the bearing. In each case, preferably, a spring arm 105 is arranged here adjacent to a bearing shell 102/112 in a fitting means 100 and/or the bearing cover 110 and is, for example, cut free out of a respective wall.

Furthermore, the rotary bearing 21 of the first rotary and thrust bearing 21/25 (cf. Figure 8) can be mechanically preloaded rotationally into its relative rest position on the connector base 10. For this purpose, the bearing cover 110 comprises a resetting device 118 which is, for example, in the form of a spring element 118 or an elastic element 118 and preloads the mount 200 into its relative rest position on the connector base 10. In the present case, an individual resetting device 118 is in the form of a leaf spring 118, two leaf springs 118 which act substantially in parallel being able to be used per side of the bearing. The respective leaf spring 118 bears here against an upper side, in the height direction Hr, of the mount 200.

### List of reference designations

- 0: Wall
- 1: (Electrical and mechanical) high-voltage connector
- 2: (Electrical) high-voltage line, for example stranded line
- 5: (Electrical) high-voltage mating connector
- 6: (Electrical) high-voltage line, for example busbar

- 10: Connector base
- 20: (Mechanical) articulation arrangement, in particular cardanic bearing 21, 22 plus thrust bearings 25, 26
- 21: (First) rotary bearing, pivot bearing
- 22: (Second) rotary bearing, pivot bearing
- 25: (First) thrust bearing
- 26: (Second) thrust bearing
- 30: Terminal receptacle
- 32: High-voltage terminal
- 40: Seal, for example profile seal, O-ring, etc.
- 50: Seal, for example boot, etc.

- 100: Fitting means
- 102: Bearing shell, bearing half-shell for first rotary bearing 21 and first thrust bearing 25
- 105: Resetting device, for example spring/elastic element, leaf spring
- 110: Bearing cover
- 112: Bearing half-shell for first rotary bearing 21 and first thrust bearing 25
- 118: Resetting device, for example spring/elastic element, leaf spring
- 130: Through-cutout for terminal receptacle 30

- 200: Mount
- 220: Bearing journal for first rotary bearing 21 and first thrust bearing 25
- 240: Bearing insert
- 244: Bearing shell for second rotary bearing 22 and second thrust bearing 26
- 246: Resetting device, for example spring/elastic element, spring arm

- 318: Resetting device, for example spring/elastic element, spring arm
- 340: Bearing journal for second rotary bearing 22 and second thrust bearing 26

- d: Axial movement clearance

- Lr: Longitudinal axis/direction (bidirectional)
- Hr: Vertical axis/direction (bidirectional), terminal longitudinal direction
- Mr: Fitting direction (monodirectional), plug-in direction
- Qr: Transverse axis/direction (bidirectional)

## Claims

1. Electrical and mechanical high-voltage connector (1) for at least one electrical high-voltage line (2), in particular a stranded line (2), preferably for a vehicle with an electric traction motor, comprising
a connector base (10) for mounting the high-voltage connector (1), and at least one terminal receptacle (30), fitted on the connector base (10), for at least one electrical high-voltage terminal (12) of the high-voltage connector (1), said terminal (12) extending in a height direction (Hr) of the high-voltage connector (1), **characterized in that**
a mechanical articulation arrangement (20) is accommodated between the connector base (10) and the terminal receptacle (30), by means of which the terminal receptacle (30) is movably arranged in the high-voltage connector (1) relative to the connector base (10) for tolerance compensation by the high-voltage connector (1).

2. High-voltage connector (1) according to the preceding claim, **characterized in that**:
• the articulation arrangement (20) realizes exactly one, at least one or two limited rotational degrees of freedom (Lr, Qr) and/or exactly one, at least one or two limited translational degrees of freedom (Lr, Qr) between the connector base (10) and the terminal receptacle (30),
• a rotational degree of freedom of the terminal receptacle (30) about an axis (Lr, Qr) of the high-voltage connector (1) and a corresponding translational degree of freedom of the terminal receptacle (30) along this axis (Lr, Qr) are realized by a single bearing (21/25, 22/26) in the articulation arrangement (20), and/or
• the articulation arrangement (20) is in the form of a cardanic bearing and is used to mount the terminal receptacle (30) on the connector base (10), wherein the cardanic bearing is preferably configured in such a way that the terminal receptacle (30) has at least one or two limited translational degrees of freedom (Lr, Qr).

3. High-voltage connector (1) according to one of the preceding claims, **characterized in that**:
• in order to realize a rotational degree of freedom of the terminal receptacle (30), the articulation arrangement (20) has a rotary bearing (21, 22) for each rotational degree of freedom,
• in order to realize a translational degree of freedom of the terminal receptacle (30), the articulation arrangement (20) has a thrust bearing (25, 26) for each translational degree of freedom, and/or,
• in the articulation arrangement (20), a thrust bearing (25, 26) of the terminal receptacle (30) is realized by means of an axial (Lr, Qr) movement clearance (d) of a rotary bearing (21, 22) of the terminal receptacle (30).

4. High-voltage connector (1) according to one of the preceding claims, **characterized in that** the high-voltage connector (1) comprises at least one resetting device (105, 118, 246, 318) for at least one of the bearings (21, 22, 25, 26) of the terminal receptacle (30), wherein
• the resetting device (105, 118, 246, 318) is configured in such a way that it has the tendency to bring the terminal receptacle (30) to a previous position at/in the high-voltage connector (1) in an indirect (105, 118) and/or direct (246, 318) manner.

5. High-voltage connector (1) according to one of the preceding claims, **characterized in that**:
• a mount (200) is received at/on the connector base (10) in such a way as to be rotatable about and/or displaceable in a longitudinal direction (Lr) of the high-voltage connector (1),
• a bearing (21/25) of the mount (200) in/at the connector base (10) comprises two bearing devices between which the actual mount (200) is arranged in the high-voltage connector (1), and/or
• a first bearing (21/25) of the articulation arrangement (20) is in the form of at least one journal bearing device between the mount (200) and the connector base (10).

6. High-voltage connector (1) according to one of the preceding claims, **characterized in that**:
• the terminal receptacle (30) is received in/at the mount (200) in such a way as to be rotatable about and/or displaceable in a transverse direction (Qr) of the high-voltage connector (1),
• a bearing (22/26) of the terminal receptacle (30) in/at the mount (200) comprises two bearing devices, between which the terminal receptacle (30) is arranged in the high-voltage connector (1), and/or
• a second bearing (22/26) of the articulation arrangement (20) is in the form of at least one journal bearing device between the terminal receptacle (30) and the mount (200).

7. High-voltage connector (1) according to one of the preceding claims, **characterized in that**:
• by means of an axial (Lr) movement clearance (d₂₅) between the mount (200) and the connector base (10), a translational displaceability of the mount (200) in the longitudinal direction (Lr) of the high-voltage connector (1) in/at the connector base (10) is provided,
• the mount (200) is arranged in/at the connector base (10) so as to be cushioned by means of at least one spring element (105), wherein the spring element (105) is preferably cut free out of a respective wall (100), and/or
• the axial (Lr) movement clearance (d₂₅) between the mount (200) and the connector base (10) is limited in the longitudinal direction (Hr) by means of a material overlap between the terminal receptacle (30) and the mount (200).

8. High-voltage connector (1) according to one of the preceding claims, **characterized in that**:
• by means of an axial (Qr) movement clearance (d₂₆) between the terminal receptacle (30) and the mount (200), a translational displaceability of the terminal receptacle (30) in the transverse direction (Qr) of the high-voltage connector (1) in/at the mount (200) is provided,
• the terminal receptacle (30) is arranged in/at the mount (200) so as to be cushioned by means of at least one spring element (246), wherein the spring element (246) is preferably cut free out of a respective wall (240), and/or
• the axial (Qr) movement clearance (d₂₆) between the terminal receptacle (30) and the mount (200) is limited in the longitudinal direction (Lr) by means of a material overlap between the terminal receptacle (30) and the mount (200).

9. High-voltage connector (1) according to one of the preceding claims, **characterized in that**:
• the bearing (21/25) of the mount (200) in/at the connector base (10) is arranged between a fitting means (100) of the connector base (10) and a bearing cover (110),
• the bearing (22/26) of the terminal receptacle (30) in/at the mount (200) is arranged in a wall of the mount (200) by means of a bearing insert (200), and/or
• a wall of the bearing cover (110) extends substantially in the transverse direction (Qr) and a wall of the bearing insert (200) extends substantially in the longitudinal direction (Lr).

10. High-voltage connector (1) according to one of the preceding claims, **characterized in that**
the first and/or the second rotary bearing (21, 22) comprises a resetting device (118, 318) which mechanically rotationally preloads the mount (200) and/or the terminal receptacle (30) in a direction of a respective relative starting position, and/or
the first and/or the second thrust bearing (25, 26) comprises a resetting device (105, 246) which mechanically translationally preloads the mount (200) and/or the terminal receptacle (30) in a direction of a respective relative starting position.

11. High-voltage connector (1) according to one of the preceding claims, **characterized in that**:
• exactly or at least one terminal receptacle (30) is received in an individual articulation arrangement (20) of the high-voltage connector (1),
• the high-voltage connector (1) comprises exactly one, at least one, exactly two or at least two articulation arrangements (20), and/or,
• for each individual terminal receptacle (30), an individual articulation arrangement (20) is provided at/in the connector base (10).

12. Electromechanical high-voltage connection (1) preferably for a vehicle with an electric traction motor, comprising
an electrical and mechanical high-voltage connector (1) and an electrical high-voltage mating connector (5), **characterized in that**
the high-voltage connector (1) is configured according to one of the preceding claims.

13. High-voltage connection (1) according to the preceding claim, **characterized in that**:
• the high-voltage connector (1) is electromechanically connected to at least one electrical high-voltage line (2), in particular a stranded line (2),
• the high-voltage mating connector (5) is electromechanically connected to at least one electrical high-voltage line (6), in particular a busbar (6), and/or,
• the high-voltage line (2, 6) is electromechanically connected to an electrical high-voltage entity aside from its connector (1, 5).

14. Electrical high-voltage entity, in particular assembled electrical high-voltage line (1/2), preferably for a vehicle with an electric traction motor, comprising
an electrical and mechanical high-voltage connector (1), wherein an electrical high-voltage terminal (32) is arranged in at least one terminal receptacle (30) of the high-voltage connector (1), **characterized in that**
the high-voltage connector (1) is configured according to one of the preceding claims.
